# EUROPÄISCHE PATENTSCHRIFT

(11) **EP 1 070 012 B1**
(45) Veröffentlichungstag und Bekanntmachung des Hinweises auf die Patenterteilung: **28.05.2003**
(21) Anmeldenummer: 00903666.6
(22) Anmeldetag: 03.02.2000
(51) Int. Cl.: B65G 17/08

(54) **KETTENELEMENT FÜR EINE FÖRDERKETTE, INSBESONDERE FÜR EINE MATTENFÖRDERKETTE**
CHAIN ELEMENT FOR A CONVEYOR CHAIN, ESPECIALLY FOR A MAT CONVEYOR CHAIN
ELEMENT DE CHAINE POUR UNE CHAINE DE CONVOYEUR, EN PARTICULIER POUR UNE CHAINE DE TAPIS DE TRANSPORT

(30) Priorität: 09.02.1999 DE 19905111
(43) Veröffentlichungstag der Anmeldung: 24.01.2001
(73) Patentinhaber: Flexon Systemplast GmbH, 01809 Dohna (DE)
(72) Erfinder: JANZEN, Wolfgang, D-57234 Wilnsdorf (DE); NENDEL, Klaus, D-09569 Oederan (DE); MIERUCH, Tino, D-09212 Limbach-Oberfrohna (DE); MEYNERTS, Peter, D-09224 Grüna (DE); SCHÖNBERG, Beata, D-09130 Chemnitz (DE)
(74) Vertreter: Langmaack, Jürgen, Dipl.-Ing.
(86) Internationale Anmeldenummer: EP0000848
(87) Internationale Veröffentlichungsnummer: WO00047498

(56) Entgegenhaltungen:
- WO-A-98/07642

## Beschreibung

Die Erfindung betrifft ein Kettenelement zum Aufbau einer Förderkette, insbesondere zum Aufbau einer sogenannten Mattenförderkette. Die Kettenelemente für derartige Förderketten weisen jeweils eine Tragplatte auf, die jeweils an ihren beiden quer zur Laufrichtung ausgerichteten Längskanten mit Scharnieraugen versehen ist, wobei die Scharnieraugen der aufeinanderfolgenden Kettenelemente ineinandergreifen und durch einen eingeschobenen Gelenkbolzen miteinander verbunden sind, so daß eine Scharnierbandkette gebildet wird. Bei schmalen Ketten werden die Gelenkbolzen über eine Preßverbindung in einem entsprechend bemessenen Gelenkauge gehalten. Bei Beschädigungen können die Gelenkbolzen am beschädigten Kettenelement ausgepreßt, das beschädigte Kettenelement ausgewechselt und die Gelenkbolzen wieder eingepreßt werden.

Bei breiteren Förderketten der eingangs bezeichneten Art, insbesondere bei Mattenförderketten, ist jedoch eine Preßverbindung für den Gelenkbolzen nicht mehr zweckmäßig, so daß hier eine andere Festlegung der Gelenkbolzen vorgesehen werden muß.

Aus EP-A-0 459 691 ist es bekannt, jeweils an einem endseitigen Scharnierauge eines Kettenelementes einen nach unten offenen Schlitz vorzusehen, in den ein mit einer Rast versehenes flaches Schließstück eingepreßt werden kann, durch das der zugeordnete Gelenkbolzen axial fixiert wird. Der Nachteil dieses Systems besteht darin, daß bei Beschädigungen der Rast das Schließstück unbemerkt nach unten herausfallen kann und dann im Betrieb der Gelenkbolzen seitlich aus der Förderkette herauswandern und hier mit den übrigen Maschinenteilen, insbesondere mit dem Maschinengestell kollidieren kann. Ein weiterer Nachteil besteht darin, daß das Schließstück praktisch nur dann einwandfrei zugänglich ist, wenn sich das auszuwechselnde Kettenglied im Untertrum befindet.

Aus WO-90/08078 und EP-A-0 598 453 ist eine Abwandlung gegenüber den vorbeschriebenen Systemen bekannt, bei der zwar ebenfalls ein flaches, über eine Rastverbindung in eine schlitzförmige Ausnehmung einpreßbares Schließstück vorgesehen ist, hier aber die Anordnung so getroffen ist, daß das Schließstück von oben, d. h. von der Seite der Tragplatte eingedrückt werden muß. Damit ist für ein Auswechseln eines beschädigten Gliedes der Zugang zum Schließstück von oben möglich, so daß das beschädigte Kettenelement ausgewechselt werden kann, wenn es sich im Bereich des Obertrums befindet. Bei beiden vorbeschriebenen Systemen besteht darüber hinaus ein Nachteil darin, daß die Schließstücke als lose zusätzlich einzuführende Elemente ausgebildet sind, so daß diese bei Montage und Demontage vollständig von der Förderkette gelöst werden müssen.

Aus US-A-5,335,768 ist eine abgewandelte Lösung bekannt, bei der ebenfalls eine schlitzförmige Ausnehmung im Bereich des endseitigen Scharnierauges vorgesehen ist. Das Schließstück ist jedoch am Kettenelement schwenkbar und fest mit diesem verbunden, so daß zum Öffnen über ein Werkzeug, beispielsweise einen Schraubdreher, das Schließstück nach unten verschwenkt werden muß, um das Scharnierauge für eine Entnahme des Gelenkbolzens freizugeben. Da das Schließstück nach unten herausschwenkt, besteht auch hier die Gefahr, daß bei mangelhafter Sicherung der Verschluß trotz einer vorhandenen Rastverbindung sich öffnen kann.

Schließlich ist es aus US-A-5,217,110 und EP-A-0 827 921 bekannt, in den einzelnen Kettenelementen eine taschenförmige Ausnehmung vorzusehen, in die ein Schiebestück eingesetzt ist, das mit einer Längsführung am Kettenelement zusammenwirkt und dementsprechend zum Öffnen und Schließen parallel zur Ebene des Kettenelementes verschiebbar ist. Der Zugang für das Werkzeug kann hierbei entweder von der Seite oder von oben möglich sein. Diese Ausgestaltung bietet zwar den Vorteil, daß beim Öffnen und Schließen der Schließriegel die Bewegungsebene der Förderkette nicht überragt und auch zum öffnen nicht in den Gelenkbereich gelangen kann. Der Nachteil dieser Ausführungsform besteht jedoch darin, daß hier ein sehr aufwendiges Werkzeug zur Herstellung der einzelnen Kettenelemente benötigt wird.

Aus WO98/07642 ist ein Kettenelement der gattungsgemäßen Art bekannt, bei dem eine Querbohrung zur Aufnahme eines stiftförmigen Verriegelungselementes vorgesehen ist, deren Achse die Achse der Gelenkbolzenbohrung schneidet. Der Durchmesser des Schaftes des Verriegelungselementes muß deutlich größer sein als der Durchmesser des zu sichernden Gelenkbolzens, um eine zuverlässige und vor allen betriebssichere Verriegelung des Gelenkbolzens zu gewährleisten.

Der Erfindung liegt die Aufgabe zugrunde, ein Kettenelement für eine Förderkette der vorstehend beschriebenen Art zu schaffen, daß in Herstellung und Handhabung einfach ist und eine hohe Betriebssicherheit aufweist.

Diese Aufgabe wird gemäß der Erfindung gelöst durch ein Kettenelement für eine Förderkette mit den Merkmalen des Anspruchs 1. Diese Anordnung hat den Vorteil einer einfachen Fertigung, da lediglich eine im wesentlichen zylindrische Bohrung zur Aufnahme des stiftförmigen Verriegelungselementes eingeformt werden muß. Diese Querbohrung ist zweckmäßigerweise so ausgerichtet, daß sie senkrecht zur Ebene der Tragplatte verläuft, so daß nicht nur das Werkzeug zur Herstellung eines Kettenelementes einfach ist, sondern darüber hinaus auch der Zugang zu dem Verriegelungselement so gelegt werden kann, daß das Verriegelungselement von oben betätigbar ist.

Vorteilhaft ist, daß die Achse der Querbohrung und die Achse der Gelenkbolzenbohrung sich mit Abstand zueinander kreuzen. Hierdurch wird ein Teil der Gelenkbolzenbohrung durch das stiftförmige Verriegelungselement abgedeckt, so daß der Gelenkbolzen gegen ein Herausschieben gesichert ist. Wird auf einer Seite der Förderkette das stiftförmige Verriegelungselement entfernt, dann kann über den verbleibenden Freiraum zwischen dem verbleibenden Verriegelungselement und eines Teils des Endes der Querbohrung mit Hilfe eines Werkzeugs der Gelenkbolzen so weit herausgeschoben werden, daß er auf der anderen Seite mit einem Werkzeug, beispielsweise einer Zange, vollständig herausgezogen werden kann. Bei einer derartigen Ausrichtung der Achsen von Querbohrung und Gelenkbolzenbohrung zueinander und bei einem drehbar gelagerten Verriegelungselement ist die Schaftfläche des Verriegelungselementes mit der Ausnehmung versehen. Diese Anordnung hat den Vorteil, daß ein verhältnismäßig geringer Schaftquerschnitt notwendig ist, also das Verriegelungselement geringe Abmessungen aufweist und nur eine geringe Verminderung der Scharnieraugenbreite bewirkt. Die Ausnehmung ist hierbei so bemessen, daß in der Öffnungsstellung der Querschnitt der Gelenkbolzenbohrung völlig freigegeben wird und daß in der Schließstellung durch ein Verdrehen des stiftförmigen Verriegelungselementes um 90° die Gelenkbolzenbohrung so weit verschlossen wird, daß der Gelenkbolzen zuverlässig im Scharnier gehalten wird. Zum Entfernen eines Gelenkbolzens können auf beiden Seiten die Verriegelungselemente geöffnet und der Gelenkbolzen mit einem stabilen stabförmigen Werkzeug ausgestoßen werden. Dadurch, daß das stiftförmige Verriegelungselement in der Querbohrung drehbar gelagert ist und einen Schaft aufweist, der mit einer Ausnehmung versehen ist, die in einer ersten Drehstellung des Verriegelungselementes die Gelenkbolzenbohrung freigibt und in einer zweiten Drehstellung die Gelenkbolzenbohrung sperrt, ergibt sich der Vorteil, daß das Verriegelungselement bereits bei der Herstellung des einzelnen Kettenelementes montiert werden kann und durch Drehung nach Art einer Schließeinrichtung mit seiner Ausnehmung die Querbolzenbohrung freigibt oder verschließt.

In zweckmäßiger weiterer Ausgestaltung der Erfindung ist vorgesehen, daß der Schaft des Verriegelungsmittels an einem Ende einen Schlitz aufweist und daß die hierdurch gebildeten federnden Zungen an ihren freien Enden mit einem die Schaftaußenfläche überragenden Ansatz versehen sind. Ein derart ausgebildetes stiftförmiges Verriegelungsmittel läßt sich in einfacher Weise in die Querbohrung der Tragplatte einclipsen und wird über die an den Schaftenden federnd abgestützten Ansätze in der Querbohrung zuverlässig und formschlüssig gehalten, so daß ein unbeabsichtigtes Herausfallen praktisch nicht möglich ist.

In weiterer vorteilhafter Ausgestaltung ist ferner vorgesehen, daß das Verriegelungselement mit wenigstens einem Ansatz versehen ist, der mit den beiden Drehstellungen zugeordneten Ausnehmungen als Sperrast zusammenwirkt. Zweckmäßig ist es hierbei ferner, wenn der Kopf des Verriegelungselementes mit einer Ausnahme für ein Stellwerkzeug versehen ist. Dies kann beispielsweise ein Schlitz sein, in den ein Schraubendreher eingesetzt wird.

Die Erfindung wird anhand schematischer Zeichnungen von Ausführungsbeispielen näher erläutert. Es zeigen:
- Fig. 1: eine Aufsicht auf mehrere als Teil einer Mattenförderkette miteinander verbundenen Kettenelemente,
- Fig. 2: eine Ansicht auf eine Seitenkante eines Kettenelementes,
- Fig. 3: eine Aufsicht auf die Unterseite eines Kettenelementes,
- Fig. 4 und 5: jeweils perspektivisch eine Ansicht der Oberseite und der Unterseite eines Kettenelementes,
- Fig. 6 und 7: perspektivisch eine Aufsicht und eine Untersicht eines langen Kettenelementes,
- Fig. 8: eine Aufsicht auf ein Kettenelement mit durchbrochener Tragplatte,
- Fig. 9.1 bis 9.4: den Aufbau und die Funktionsweise eines Kettenelementes mit drehbarem Verriegelungsmittel,
- Fig. 10 und 11: in perspektivischer Ansicht und in größerem Maßstab das Verriegelungselement gem. Fig. 9,
- Fig. 12 und 13: perspektivisch und teilweise im Schnitt die Zuordnung einer Förderkette zu einem Umlenkrad.

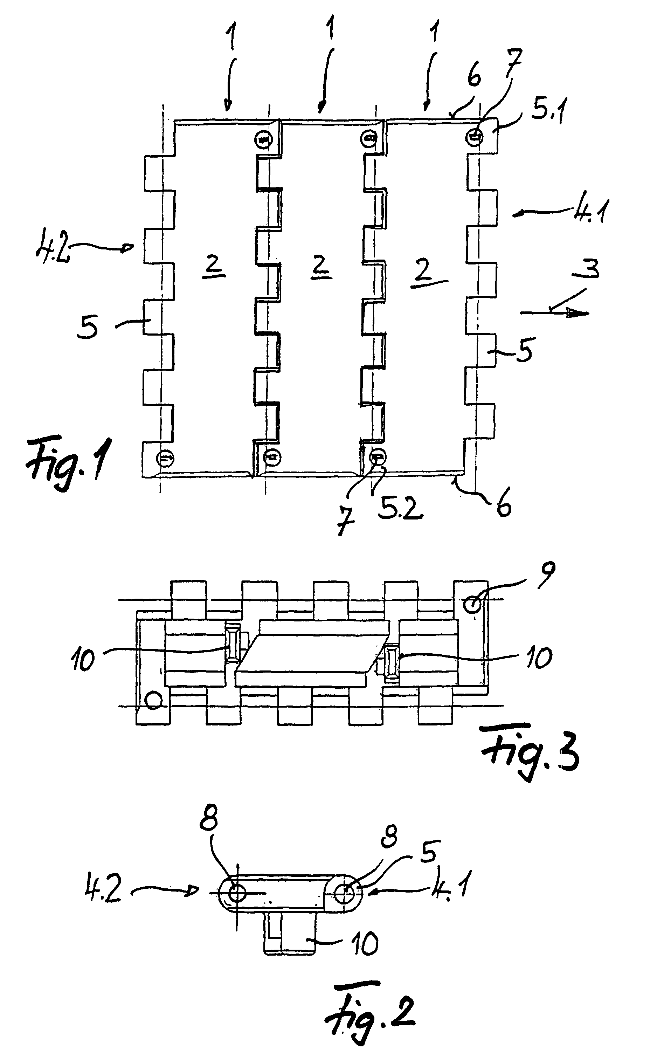

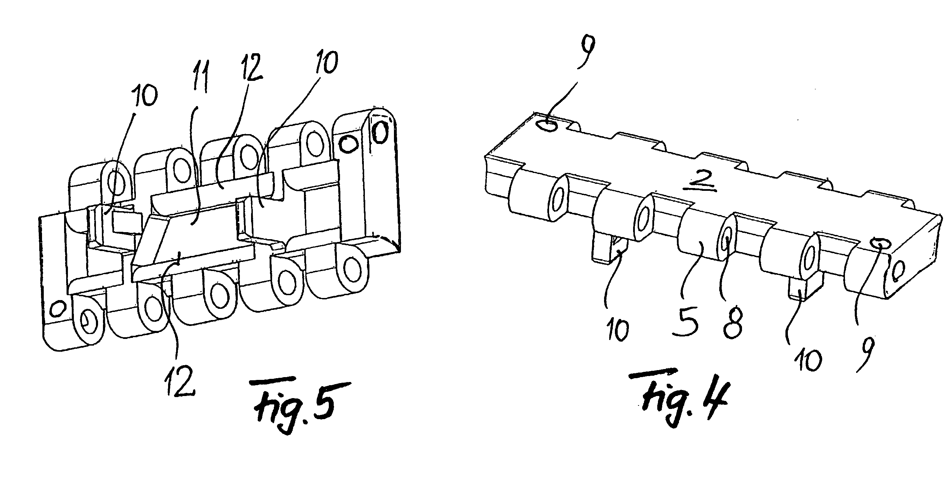

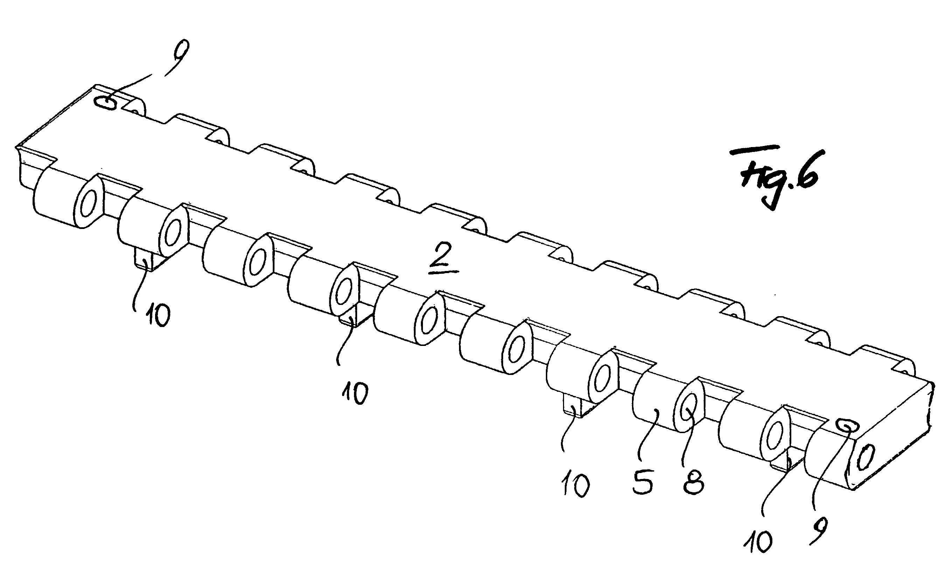

Fig. 1 zeigt in einer Aufsicht einen Teil einer Förderkette, die aus mehreren Kettenelementen 1 zusammengesetzt ist. Die Kettenelemente 1 weisen eine Tragplatte 2 auf, die jeweils an ihren beiden quer zur Laufrichtung (Pfeil 3) ausgerichteten Längskanten 4 mit mehreren, mit Abstand zueinander angeordneten Scharnieraugen 5 versehen ist. Die Scharnieraugen 5 weisen jeweils miteinander fluchtende Bohrungen zur Aufnahme eines Gelenkbolzens auf, wobei die Scharnieraugen 5 der einen Längskante 4.1 versetzt angeordnet sind zur anderen Längskante 4.2. Jeweils das der Seitenkante 6 zugeordnete Scharnierauge 5.1 einerseits und 5.2 einer Tragplatte ist mit einer quer zur Gelenkbolzenbohrung 8 (hier nur durch ihre Achse angedeutet) verlaufenden und diese schneidenden Querbohrung 9 versehen, wie nachstehend anhand von Fig. 9 noch näher beschrieben wird, in der jeweils ein von oben eingeführtes stiftförmiges Verriegelungselement 7 angeordnet ist. Die Lage der Gelenkbolzenbohrungen 8 und der Querbohrung 9 ist in dem perspektivischen Ansichten gem. Fig. 4 und 5 näher dargestellt.

Wie Fig. 1 erkennen läßt, kann ein durch die Gelenkbolzenbohrungen 8 zweier benachbarter und ineinandergreifender Kettenelemente hindurchgeschobener Gelenkbolzen über die jeweils endseitig eingebrachten Verriegelungsmittel fixiert werden, so daß er nur nach dem Öffnen wenigstens eines Verriegelungselementes seitlich wieder herausgestoßen werden kann.

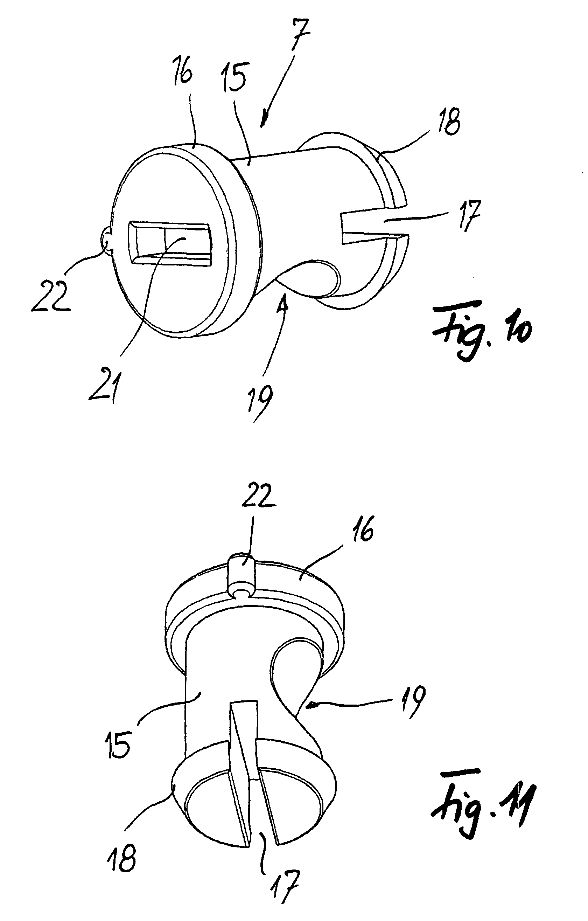

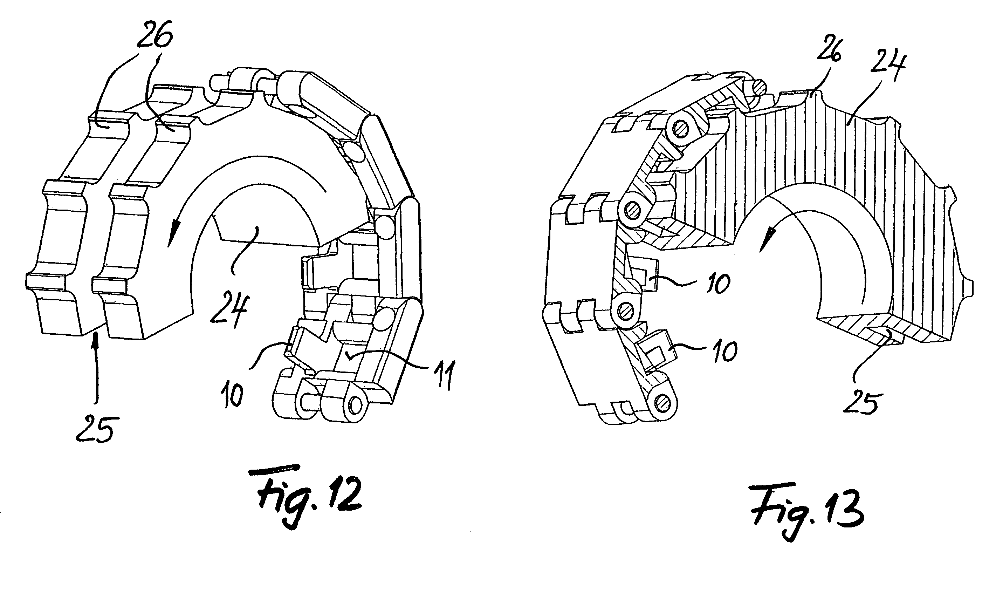

Wie die in Fig. 3 wiedergegebene Ansicht der Unterseite eines Kettenelementes 1 sowie die zugehörige perspektivische Darstellung in Fig. 5 erkennen läßt, ist jedes Kettenelement auf der Unterseite seiner Tragplatte 2 mit wenigstens zwei mit Abstand nebeneinander angeordneten, die Plattenfläche überragenden Zapfen 10 versehen. Zumindest zwischen den beiden Zapfen 10 ist eine Vertiefung 11 vorgesehen, deren seitliche Begrenzungsflächen 12 gekrümmt ausgebildet sind, so daß sie, wie anhand von Fig. 12 und 13 noch dargestellt und beschrieben werden wird, an entsprechend geformten Zähnen eines Umlenkzahnrades zur Anlage kommen können.

Wie sich aus Fig. 1 ferner ableiten läßt, ist es möglich, durch die versetzte Anordnung von mehreren Kettenelementen 1 eine Förderkette in jeder beliebigen Breite zusammenzusetzen. Um hier eine glatte Seitenkante der Förderkette zu erzielen ist es zweckmäßig, wenn für den Aufbau einer derartigen Mattenförderkette Kettenelemente mit geringer Breite, wie in Fig. 1 dargestellt und Kettenelemente mit doppelter Breite, wie in Fig. 6 dargestellt, jeweils miteinander kombiniert werden, wobei zusätzlich dann noch der Vorteil der versetzten Anordnung gegeben ist, bei der ein in Längsrichtung der Förderkette durchlaufender Schlitz vermieden wird. Bei entsprechender Abstimmung der Breitenabmessungen der unterschiedlichen Kettenelemente, beispielsweise im Verhältnis 2:1, lassen sich mit nur zwei Elementtypen Förderketten mit beliebigen Förderbreiten herstellen.

Die in Fig. 6 und Fig. 7 dargestellten, die untere Plattenfläche überragenden Zapfen 10, sind bei der breiten Ausführungsform gem. Fig. 6 so angeordnet, daß sie in Verbindung mit weniger breiten Kettenelementen entsprechend Fig. 1 in Längsrichtung der gesamten Förderkette miteinander fluchten. Im übrigen entspricht der Aufbau der breiten Kettenelemente gem. Fig. 6 und 7 dem Aufbau der anhand der Fig. 1, 4 und 5 beschriebenen schmalen Kettenelemente.

Fig. 8 zeigt eine Aufsicht auf eine abgewandelte Ausführungsform für derartige Kettenelemente, bei der die Tragplatte 2 mit einer Vielzahl von Durchbrechungen 13 versehen ist, so daß die Förderfläche der hieraus gebildeten Förderkette eine gitterartige Struktur erhält. Im übrigen entspricht der Aufbau dem anhand der Fig. 1 bis 5 beschriebenen Aufbau. Die Durchbrüche sind so angeordnet, daß die verbleibenden Stege 13.1 eine stabwerkähnliche Sturktur bilden, die eine verzweigende Übertragung der Zugkraft jeweils von einem Scharnierauge 5 der einen Längskante 4.1 auf ein Scharnierauge 5 an der anderen Längskante 4.2 bewirkt. Durch diese Gestaltung ergibt sich ein vorteilhafter Kraftfluß und somit eine Verbesserung der Zugfestigkeit für Kettenelemente mit durchbrochener Tragplatte.

Während es, wie vorstehend angegeben, grundsätzlich möglich ist, in die Querbohrung 9 ein stiftförmiges Verriegelungselement 7 nach Art eines Nietes oder stiftförmigen Clips einzusetzen, der jeweils bei der Montage eingepreßt werden muß und bei der Demontage herausgepreßt werden muß, ist anhand von Fig. 9 eine Ausführungsform beschrieben, die ein schloßartiges Verriegelungselement aufweist.

Wie aus Fig. 9.1 ersichtlich, ist die zu den Gelenkbolzenbohrungen 8 verlaufende Querbohrung 9 so angeordnet, daß sich beide Bohrungen zwar schneiden, jedoch die zugehörigen Achsen sich mit Abstand zueinander kreuzen. Die Querbohrung 9 weist an ihrem oberen in der Tragplatte 2 liegenden Enden eine Erweiterung 14 auf. Das hier in der Sprengdarstellung dargestellte Verriegelungselement 7 weist hierbei einen Schaft 15 auf, der an seinem oberen Ende mit einem Kopf 16 abschließt. An seinem unteren Ende ist der Schaft 15 mit einem Schlitz 17 versehen, durch den federnde Zungen gebildet werden, die an ihren freien Enden mit Ansätzen 18 versehen sind, die die Schaftaußenfläche überragen. Wird dieses stiftförmige Verriegelungselement in die Querbohrung 9 eingepreßt, dann wird es am unteren Ende durch die Ansätze 18 und am oberen Ende durch den Kopf 16 in der Querbohrung 9 gehalten, wobei durch eine entsprechende Bemessung der Erweiterung 14 und des Kopfes 16 das Verriegelungselement die Ebene der Tragplatte 2 nicht überragt, wie dies in Fig. 9.2 dargestellt ist.

Bei dem hier dargestellten Verriegelungselement ist der Schaft 15 mit einer seitlichen Ausnehmung 19 versehen, so daß bei einem Einpressen des Verriegelungselementes in der in Fig. 9.1 dargestellten Lage infolge der sich mit Abstand kreuzenden Bohrungsachsen die Gelenkbolzenbohrung 8 in ihrem Querschnitt vollständig frei bleibt. Damit ist es dann möglich, wie in Fig. 9.2 dargestellt, einen Gelenkbolzen 20 von der Seite her in die entsprechend Fig. 1 ineinandergefügten und miteinander fluchtenden Gelenkbolzenbohrungen an den einzelnen Scharnieraugen der beiden benachbarten Kettenelemente einzuschieben und diese zu einem Scharnier zu verbinden. Die Länge des Gelenkbolzens 20 ist hierbei so bemessen, daß er kürzer ist als die gesamte Scharnierbreite.

Nachdem der Gelenkbolzen vollständig eingeschoben worden ist, wie dies aus Fig. 9.3 ersichtlich ist, kann mit Hilfe eines Werkzeuges, das in eine Ausnahme 21, beispielsweise in Form eines Schlitzes eingesteckt wird, das Verriegelungseloement 7 um 90° gedreht werden, so daß nunmehr der Schaft 19 des Verriegelungselementes 7 die Gelenkbolzenbohrung dieses äußersten Scharnierauges entsprechend überdeckt und damit gegen ein Herausschieben des Gelenkbolzens 20 sperrt. Diese Positionierung ist in Fig. 9.4 dargestellt.

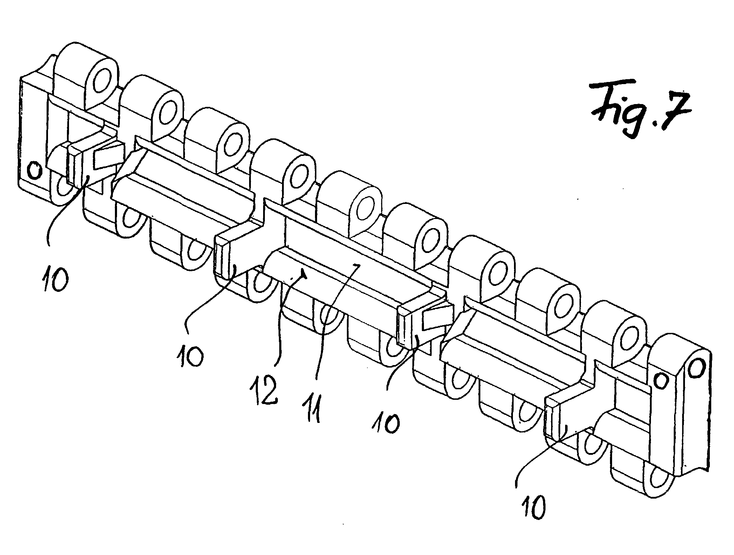

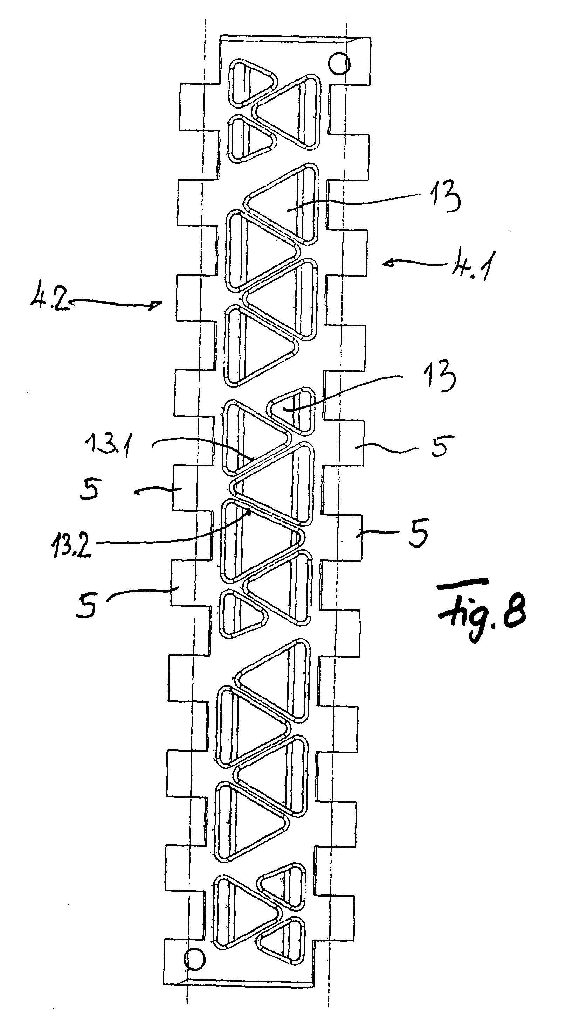

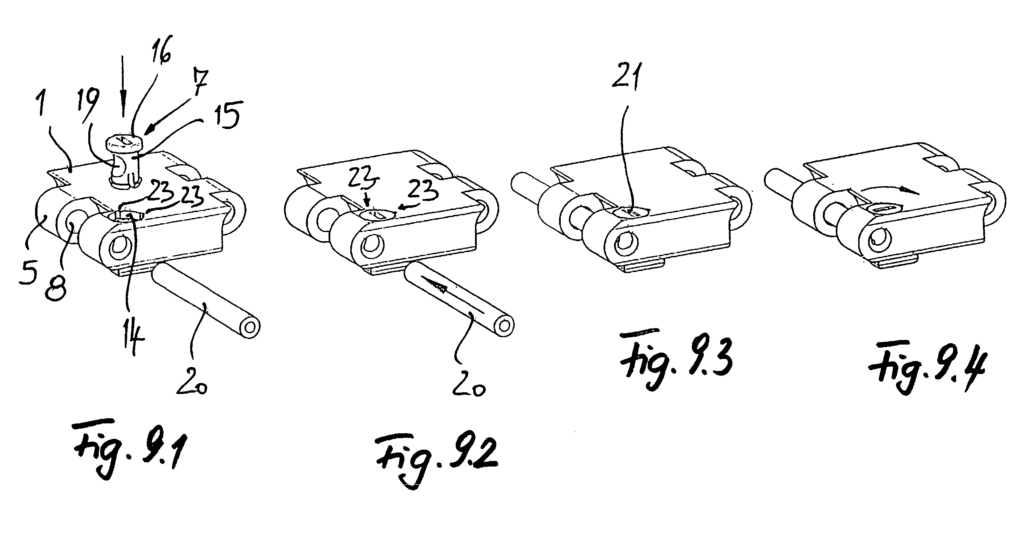

Das stiftförmige Verriegelungselement 7 ist in Fig. 10 und 11 in verschiedenen perspektivischen Ansichten in größerem Maßstab dargestellt. Der Aufau entspricht dem anhand von Fig. 9 beschriebenen Aufbau, so daß bei gleichen Bezugszeichen auf die vorstehende Beschreibung verwiesen werden kann.

Aus dieser größeren Darstellung ist noch eine Besonderheit des vorstehend beschriebenen Verriegelungselementes zu entnehmen. Am Kopf 16 ist ein seitlicher Ansatz 22 vorgesehen, dem in der Erweiterung 14 der Querbohrung 9, die den Kopf 16 des Verriegelungselementes aufnimmt, entsprechende, um 90° versetzt zueinander angeordnete Ausnehmungen 23 zugeordnet sind. Die Zuordnung ist hierbei, wie aus Fig. 10 ersichtlich, so vorgesehen, daß der Ansatz 22 in Verlängerung der schlitzförmigen Ausnahme 21 angeordnet ist, so daß, wie aus Fig. 9.3 und 9.4 ersichtlich, die Ausrichtung der schlitzförmigen Ausnehmung 21 zugleich erkennen läßt, ob das Verriegelungsmittel "offen" oder "geschlossen" ist.

Der aus Fig. 9 ersichtliche Aufbau und der Montageablauf läßt erkennen, daß die hier dargestellte Verriegelung einfach im Aufbau und einfach in der Handhabung ist. Das stiftförmige Verriegelungselement 7 ist hierbei jeweils von oben, d. h. von der tragenden Seite der Förderkette her zugänglich und gegen ein Herausfallen zuverlässig gesichert. In der Fertigung besteht die Möglichkeit grundsätzlich alle Kettenelemente jeweils endseitig mit diesen Verriegelungselementen zu versehen. Soll durch die Anordnung mehrerer Kettenelemente nebeneinander eine entsprechend breite Förderkette hergestellt werden, so bedarf es hierzu keiner besonderen Maßnahmen, da das Verriegelungselement in den vom Gelenkbolzen vollständig durchsetzten Bereichen in Offenstellung gehalten werden kann und lediglich an den jeweils außenliegenden Kettenelementen die Verriegelungselemente in Schließstellung gebracht werden müssen.

In Fig. 12 und 13 sind jeweils in einer perspektivischen Ansicht Stücke einer Förderkette entsprechend dem vorstehend beschriebenen Aufbau im Eingriff mit einem gezahnten Kettenrad 24 dargestellt. Das Kettenrad, das hier nur als Teilstück dargestellt ist, entspricht in seiner Breite im wesentlichen der Breite der Förderkette, so daß es bei breiten Förderketten auch die Form einer gezahnten Walze aufweisen kann. Das Kettenrad ist, wie aus Fig. 13 ersichtlich, mit in Umfangsrichtung verlaufenden Ausnehmungen 25 versehen, in denen jeweils die auf der Unterseite einer jeden Tragplatte angeordneten, in Längsrichtung der Förderkette miteinander fluchtenden Zapfen 10 geführt werden. Die Zähne 26 greifen hierbei jeweils in die Ausnehmungen 11 auf der Unterseite der einzelnen Kettenelemente ein, wobei die Zähne jeweils in Durchlaufrichtung und Drehrichtung des Kettenrades gesehen an einer der gekrümmten Flanken 12 der Vertiefung 11 anliegen, wie dies aus Fig. 13 ersichtlich ist.

## Patentansprüche

1. Kettenelement für eine Förderkette, insbesondere für eine Mattenförderkette, mit einer Tragplatte (2), die jeweils an ihren beiden quer zur Laufrichtung ausgerichteten Längskanten (4) mit mehreren nebeneinander und mit Abstand zueinander angeordneten Scharnieraugen (5) versehen ist, die miteinander fluchtende Bohrungen (8) zur Aufnahme eines Gelenkbolzens (20) aufweisen, wobei die Scharnieraugen (5) der einen Längskante (4.1) versetzt zu den Scharnieraugen (5) der anderen Längskante (4.2) angeordnet sind und wobei jeweils wenigstens ein einer Seitenkante (6) der Tragplatte (2) zugeordnetes Scharnierauge mit einer quer zur Gelenkbolzenbohrung (8) verlaufenden und diese schneidende Querbohrung (9) versehen ist, in der ein stiftförmiges in der Querbohrung (9) drehbar gelagert Verriegelungselement (7) angeordnet ist, das einen Kopf (16) aufweist, der mit der Oberfläche der Tragplatte (2) fluchtend in einer Erweiterung (14) der Querbohrung (9) angeordnet ist und das einen Schaft (15) aufweist, der mit einer Ausnehmung (19) versehen ist, **dadurch gekennzeichnet, daß** die Achse der Querbohrung (9) und die Achse der Gelenkbolzenbohrung (8) sich mit Abstand zueinander kreuzen und daß die Schaftfläche des Verriegelungselementes (7) mit einer seitlichen Ausnehmung (19) versehen ist, die in einer ersten Drehstellung des Verriegelungselementes (7) die Gelenkbolzenbohrung (8) freigibt und in einer zweiten Drehstellung die Gelenkbolzenbohrung sperrt.

2. Kettenelement nach Anspruch 1, **dadurch gekennzeichnet, daß** der Schaft (15) des Verriegelungselementes (7) an einem Ende einen Schlitz (17) aufweist und daß die hierdurch gebildeten federnden Zungen an ihren freien Enden mit einem die Schaftaußenfläche überragenden Ansatz (18) versehen sind.

3. Kettenelement nach einem der Ansprüche 1 oder 2, **dadurch gekennzeichnet, daß** das Verriegelungselement (7) mit wenigstens einem Ansatz (22) versehen ist, der mit den beiden Drehstellungen zugeordneten Ausnehmungen (23) als Sperrast zusammenwirkt.

4. Kettenelement nach einem der Ansprüche 1 bis 3, **dadurch gekennzeichnet, daß** der Kopf (16) des Verriegelungselementes (7) mit einer Ausnahme (21) für ein Stellwerkzeug versehen ist.

5. Kettenelement nach einem der Ansprüche 1 bis 4, **dadurch gekennzeichnet, daß** die Tragplatte (2) auf ihrer Unterseite mit wenigstens zwei mit Abstand nebeneinander angeordneten, die Plattenfläche überragenden Zapfen (10) versehen ist.

6. Kettenelement nach einem der Ansprüche 1 bis 5, **dadurch gekennzeichnet, daß** die Tragplatte (2) auf ihrer Unterseite zwischen zwei benachbarten Zapfen (10) eine Vertiefung (11) für den Eingriff eines Zahnes (26) einer gezahnten Umlenkwalze (24) versehen ist.

## Claims

1. A chain element for a chain conveyor, in particular for a mesh chain conveyor, with a supporting plate (2) which is provided at each of its two long edges (4) oriented transversely to the direction of travel with a plurality of hinge eyes (5) arranged next to each other and spaced apart from each other, which hinge eyes have bores (8) which are flush with one another for receiving a hinge pin (20), the hinge eyes (5) of one long edge (4.1) being offset relative to the hinge eyes (5) of the other long edge (4.2) and in each case at least one hinge eye associated with one side edge (6) of the supporting plate (2) being provided with a transverse bore (9) extending transversely to the hinge pin bore (8) and intersecting same, in which transverse bore a pin-like locking element (7) rotatably mounted in the transverse bore (9) is arranged which has a head (16) which is arranged flush with the surface of the supporting plate (2) in a widened section (14) of the transverse bore (9) and which has a shank (15) which is provided with a cutout (19), **characterised in that** the axis of the transverse bore (9) and the axis of the hinge pin bore (8) cross one another at a distance from each other and that the shank surface of the locking element (7) is provided with a lateral cutout (19) which in a first rotary position of the locking element (7) releases the hinge pin bore (8) and in a second rotary position blocks the hinge pin bore.

2. A chain element according to Claim 1, **characterised in that** the shank (15) of the locking element (7) has a slot (17) at one end and that the resilient tongues formed thereby are provided at their free ends with a shoulder (18) which projects across the outer shank surface.

3. A chain element according to one of Claims 1 or 2, **characterised in that** the locking element (7) is provided with at least one shoulder (22) which co-operates with the cutouts (23) associated with the two rotary positions as a locking catch.

4. A chain element according to one of Claims 1 to 3, **characterised in that** the head (16) of the locking element (7) is provided with a cutout (21) for an adjusting tool.

5. A chain element according to one of Claims 1 to 4, **characterised in that** the supporting plate (2) is provided on its underside with at least two spaced-apart projections (10) which extend across the plate surface.

6. A chain element according to one of Claims 1 to 5, **characterised in that** the supporting plate (2) is provided on its underside between two adjacent projections (10) [with] a recess (11) for a tooth (26) of a toothed deflecting roller (24) to engage in.

## Revendications

1. Elément de chaîne pour une chaîne de convoyeur, en particulier pour une chaîne de tapis de transport, comprenant un plateau de support (2) pourvu, respectivement sur ses deux bords longitudinaux (4) orientés perpendiculairement au sens de la marche, de plusieurs oeillets de charnière (5) disposés à distance et les uns à côté des autres, qui présentent des perçages (8) alignés les uns avec les autres pour recevoir un boulon d'articulation (20), les oeillets de charnière (5) de l'un des bords longitudinaux (4.1) étant décalés par rapport aux oeillets de charnière (5) de l'autre bord longitudinal (4.2), et au moins un oeillet de charnière respectif associé à chaque bord latéral (6) du plateau de support (2) étant pourvu d'un perçage transversal (9) s'étendant perpendiculairement au perçage (8) de boulon d'articulation et coupant celui-ci, dans lequel perçage transversal (9) est disposé un élément de verrouillage (7) en forme de tige logé en rotation qui présente une tête (16) disposée alignée avec la surface du plateau de transport (2) dans une extension (14) du perçage transversal (9) et qui présente une tige (15) pourvue d'un évidement (19), **caractérisé en ce que** l'axe du perçage transversal (9) et l'axe du perçage (8) de boulon d'articulation se croisent à distance l'un de l'autre, et **en ce que** la surface de tige de l'élément de verrouillage (7) est pourvue d'un évidement latéral (19), qui dégage le perçage (8) de boulon d'articulation dans une première position de rotation de l'élément de verrouillage (7) et qui ferme le perçage de boulon d'articulation dans une deuxième position de rotation.

2. Elément de chaîne selon la revendication 1, **caractérisé en ce que** la tige (15) de l'élément de verrouillage (7) présente une fente (17) à une extrémité, et **en ce que** les languettes élastiques ainsi formées sont pourvues, à leurs extrémités libres, d'un appendice (18) dépassant la surface extérieure de la tige.

3. Elément de chaîne selon l'une quelconque des revendications 1 ou 2, **caractérisé en ce que** l'élément de verrouillage (7) est pourvu d'au moins un appendice (22), qui coopère comme came d'arrêt avec des évidements (23) associés aux deux positions de rotation.

4. Elément de chaîne selon l'une quelconque des revendications 1 à 3, **caractérisé en ce que** la tête (16) de l'élément de verrouillage (7) est pourvue d'un évidement (21) pour un outil de réglage.

5. Elément de chaîne selon l'une quelconque des revendications 1 à 4, **caractérisé en ce que** le plateau de support (2) est pourvu, sur sa face inférieure, d'au moins deux tourillons (10) disposés à distance l'un à côté de l'autre et saillant de la surface du plateau.

6. Elément de chaîne selon l'une quelconque des revendications 1 à 5, **caractérisé en ce que** le plateau de support (2) est pourvu, sur sa face inférieure, entre deux tourillons (10) voisins, d'un creux (11) pour l'engrènement d'une dent (26) d'un cylindre de renvoi (24) denté.
